# EUROPÄISCHE PATENTSCHRIFT

(11) **EP 2 582 759 B1**
(45) Veröffentlichungstag und Bekanntmachung des Hinweises auf die Patenterteilung: **17.04.2019**
(21) Anmeldenummer: 11724214.9
(22) Anmeldetag: 09.06.2011
(51) Int. Cl.: C08L 77/06, C08L 79/00, C08L 71/08

(54) **WÄRMEALTERUNGSBESTÄNDIGE POLYAMIDE**
THERMAL AGEING-RESISTANT POLYAMIDES
POLYAMIDES RÉSISTANTS AU VIEILLISSEMENT THERMIQUE

(30) Priorität: 15.06.2010 EP 10165922
(43) Veröffentlichungstag der Anmeldung: 24.04.2013
(73) Patentinhaber: BASF SE, 67056 Ludwigshafen am Rhein (DE)
(72) Erfinder: PRUSTY, Manoranjan, 68167 Mannheim (DE); BAUMERT, Martin, Singapore 275981 (SG); BRUCHMANN, Bernd, 67251 Freinsheim (DE); CRISTADORO, Anna, 64646 Heppenheim (DE)
(74) Vertreter: BASF IP Association
(86) Internationale Anmeldenummer: PCT/EP2011/059546
(87) Internationale Veröffentlichungsnummer: WO 2011/157615

(56) Entgegenhaltungen:
- EP-A1- 1 424 360
- EP-A1- 2 022 827
- HAWKER C J ET AL: "HYPERBRANCHED POLY(ETHYLENE GLYCOL)S: A NEW CLASS OF ION-CONDUCTINGMATERIALS", MACROMOLECULES, AMERICAN CHEMICAL SOCIETY, WASHINGTON, DC; US, Bd. 29, Nr. 11, 20. Mai 1996 (1996-05-20), Seiten 3831-3838, XP000586996, ISSN: 0024-9297, DOI: 10.1021/MA951909I

## Beschreibung

Die Erfindung betrifft
A) 10 bis 99,99 Gew.-% eines Polyamides
B) 0,01 bis 20 Gew.-% eines hochfunktionellen Polyetherols mit einer OH Zahl von 3 bis 1350 mg KOH/g Polyetherol (gemäß DIN 53240, Teil 2) und einem Verzweigungsgrad von 10 bis 99,9 %, erhältlich durch Umsetzung von mindestens einem tri- oder höherfunktionellen Alkohol und weiteren difunktionellen Alkoholen sowie gegebenenfalls weiteren monofunktionellen Alkoholen und/oder Modifizierungsreagenzien mit Hilfe von sauren Katalysatoren, wobei der tri- oder höherfunktionelle Alkohol nicht Glycerin ist,
C) 0 bis 70 Gew.-% weiterer Zusatzstoffe,
wobei die Summe der Gewichtsprozente der Komponenten A) bis C) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Aus der EP-A 1 424 360 sind verzweigte Polyether/Polyglycerole mit anderer Struktur bekannt, welche die Fließfähigkeit von Thermoplasten erhöhen sollen.

Die Wärmealterungsbeständigkeit (WAB) ist in den bekannten Formmassen, insbesondere über längere thermische Belastungszeiträume, immer noch unzureichend.

Der vorliegenden Erfindung lag daher die Aufgabe zugrunde, thermoplastische Polyamidformmassen zur Verfügung zu stellen, welche eine verbesserte WAB und eine gute Oberfläche nach Wärmealterung sowie Mechanik aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 99,99, vorzugsweise 20 bis 99,9 und insbesondere 25 bis 94 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid®C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/61/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

**AB-Polymere:**

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

**AA/BB-Polymere**

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA 9T | 1,9-Nonandiamin, Terephthalsäure |
| PA MXD6 | m-Xylylendiamin, Adipinsäure |

**AA/BB-Polymere**

| | |
|---|---|
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Als Komponente B) enthalten die erfindungsgemäßen Formmassen 0,01 bis 20, vorzugsweise 0,1 bis 10 und insbesondere 0,1 bis 1 Gew.-% eines hochfunktionellen Polyetherols mit einer OH-Zahl von 3 bis 1350, vorzugsweise von 6 bis 1150 und insbesondere von 8 bis 800 mg und ganz besonders von 10 bis 700 KOH/g Polyetherol (gemäß DIN 53240, Teil2) und einem Verzweigungsgrad von 10 bis 99,9 %, erhältlich durch Umsetzung von mindestens einem tri- oder höherfunktionellen Alkohol und weiteren difunktionellen Alkoholen sowie gegebenenfalls weiteren monofunktionellen Alkoholen und/oder Modifizierungsreagenzien mit Hilfe von sauren Katalysatoren, wobei der tri- oder höherfunktionelle Alkohol nicht Glycerin ist.

Bevorzugt beträgt das Zahlenmittel des Molekulargewichtes (Mₙ) von 250 bis 30000 g/mol, insbesondere von 350 bis 15000 g/mol, besonders bevorzugt von 400 bis 12000g/mol.

Die Glasübergangstemperatur T_{g} (bestimmt mittels DSC-Messung; Differential Scanning Calorimetrie) beträgt vorzugsweise -30 bis +100°C, insbesondere von 4 bis 100°C.

Die erfindungsgemäße Komponente B) ist erhältlich durch ein Verfahren, bei dem man mindestens einen tri- oder höherfunktionellen Alkohol und di- sowie gegebenenenfalls monofunktionelle Alkohole und/oder Modifizierungsreagenzien mit Hilfe von sauren Katalysatoren umsetzt, wobei kein Glycerin als trifunktioneller Alkohol eingesetzt wird.

Unter einem hochfunktionellen Polyetherol ist im Rahmen dieser Erfindung ein Produkt zu verstehen, das neben den Ethergruppen, die das Polymergerüst bilden, end- oder seitenständig mindestens vier, bevorzugt mindestens sechs, besonders bevorzugt mindestens zehn OH-Gruppen aufweist, bevorzugt primäre OH-Gruppen. Dabei kann das Polymergerüst linear oder verzweigt sein. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyetherole der vorliegenden Erfindung weisen zumeist nicht mehr als 500 end- oder seitenständige funktionelle Gruppen, bevorzugt nicht mehr als 100 end- oder seitenständige funktionelle OH-Gruppen auf. Vorzugsweise ist das erfindungsgemäße hochfunktionelle Polyetherol das Kondensationsprodukt aus im Mittel mindestens 3, besonders bevorzugt mindestens 4, weiter bevorzugt mindestens 5 und insbesondere mindestens 6 di-, tri- oder höherfunktionellen Alkoholen. Dabei ist weiter bevorzugt, dass es sich dabei um das Kondensationsprodukt aus im Mittel mindestens 3, besonders bevorzugt mindestens 4, speziell mindestens mindestens 5 und insbesondere mondestens 6 tri- oder höherfunktionellen Alkoholen handelt.

Bei den hochfunktionellen Polyethern handelt es sich um hyperverzweigte oder dendrimere Polyetherole. Unter hyperverzweigten oder dendrimeren Polyetherpolyolen werden im Rahmen dieser Erfindung unvernetzte Polymermoleküle mit Hydroxyl- und Ethergruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch lineare Bereiche mit funktionellen Seitengruppen aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, geteilt durch die Summe der mittlere Anzahl von dendritischen, linearen und terminalen Verknüpfungen, multipliziert mit 100, 10 bis 99.9 %, bevorzugt 20 bis 99 %, besonders bevorzugt 20 - 95 % beträgt. Unter "Dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Als tri- und höherfunktionelle Alkohole können zum Beispiel Triole, wie Trimethylolmethan, Trimethylolethan, Trimethylolpropan (TMP), 1,2,4-Butantriol, Tris-hydroxy-methylisocyanurat, Tris-hydroxyethyl-isocyanurat (THEIC) eingesetzt werden. Ebenso können Tetrole verwendet werden, wie Bis-Trimethylolpropan (Di-TMP) oder Pentaery-thrit. Weiterhin können höherfunktionelle Polyole, wie Bis-Pentaerythrit (Di-Penta) oder Inositole verwendet werden. Weiterhin können auch Alkoxylierungsprodukte von den vorgenannten Alkoholen sowie von Glycerin verwendet werden, vorzugsweise mit 1-40 Alkylenoxideinheiten pro Molekül. Besonders bevorzugt werden als Tri- und höherfunktionelle Alkohole aliphatische Alkohole und insbesondere solche mit primären Hydroxylgruppen eingesetzt, wie Trimethylolmethan, Trimethylolethan, Trimethylolpropan, Di-TMP, Pentaerythrit, Di-Penta und deren Alkoxylate mit 1 - 30 Ethylenoxideinheiten pro Molekül sowie Glycerin-Ethoxylate mit 1-30 Ethylenoxideinheiten pro Molekül. Ganz besonders bevorzugt werden verwendet Trimethylolpropan, Pentaerythrit und deren Ethoxylate mit im Mittel 1 - 20 Ethylenoxideinheiten pro Molekül sowie Glycerin-Ethoxylate mit 1-20 Ethylenoxideinheiten pro Molekül. Ebenfalls können die genannten Alkohole in Mischung eingesetzt werden.

Weniger geeignet als tri- und höherfunktionelle Alkohole sind Verbindungen, die an zwei unmittelbar benachbarten C-Atomen OH-Gruppen tragen. Diese Verbindungen neigen unter erfindungsgemäßen Bedingungen zu Eliminierungsreaktionen, die gegenüber der Veretherungsreaktion bevorzugt sein können. Die sich bildenden ungesättigten Verbindungen bilden unter erfindungsgemäßen Veretherungsbedingungen Nebenprodukte, die dazu führen, dass das Reaktionsprodukt für den Einsatz in technisch relevanten Formulierungen unbrauchbar ist. Insbesondere treten solche Nebenreaktionen bei Glycerin auf.

Die tri- und höherfunktionellen Alkohole werden in Mischung mit difunktionellen Alkoholen eingesetzt. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Dodecandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, difunktionelle Polyetherpolyole auf Basis von Ethylenoxid, Propylenoxid, Butylenoxid oder deren Gemischen, oder Polytetrahydrofuran. Selbstverständlich können die difunktionellen Alkohole auch in Mischungen eingesetzt werden.

Die Diole dienen zur Feineinstellung der Eigenschaften des Polyetherpolyols. Falls difunktionelle Alkohole eingesetzt werden, wird das Verhältnis von difunktionellen Alkoholen zu den tri- und höherfunktionellen Alkoholen vom Fachmann je nach den gewünschten Eigenschaften des Polyethers festgelegt. Im Regelfall beträgt die Menge des oder der difunktionellen Alkohole 0 bis 99 mol%, bevorzugt 0 - 80, besonders bevorzugt 0 - 75 mol% und ganz besonders bevorzugt 0 - 50 mol% bezüglich der Gesamtmenge aller Alkohole. Dabei können durch im Laufe der Reaktion abwechselnde Zugabe von tri- und höherfunktionellen Alkoholen und Diolen auch Blockcopolyether, beispielsweise Diol-terminierte Polyether erhalten werden.

Erfindungsgemäß können auch difunktionelle Alkohole zu OH-terminierten Oligomeren vorkondensiert und anschließend der tri- oder höherfunktionelle Alkohol zugegeben werden. Auf diese Weise können ebenfalls hyperverzweigte Polymere mit linearen Blockstrukturen erhalten werden.

Weiter können auch Monoole zur Regelung der OH-Funktionalität während oder nach der Umsetzung der tri- und höherfunktionellen Alkohole zugegeben werden. Solche Monoole können beispielsweise lineare oder verzweigtkettige aliphatische oder aromatische Monoole sein. Vorzugsweise weisen diese mehr als 3, besonders bevorzugt mehr als 6 C-Atome auf. Weiterhin geeignet als Monoole sind monofunktionelle Polyetherole. Vorzugsweise werden maximal 50 mol-% Monool, bezogen auf die Gesamtmenge des tri- und höherfunktionellen Alkohols zugegeben Zur Beschleunigung der Reaktion werden saure Katalysatoren oder Katalysatorgemische zugegeben. Geeignete Katalysatoren sind zum Beispiel Säuren mit einem pK_{S}-Wert von weniger als 2,2, besonders bevorzugt sind starke Säuren.

Beispiel für Säuren mit einem pK_{S}-Wert von weniger als 2,2 sind beispielsweise Phosphorsäure (H₃PO₄), Phosphorige Säure (H₃PO₃), Pyrophosphorsäure (H₄P₂O₇), Polyphosphorsäure, Hydrogensulfat (HSO₄⁻), Schwefelsäure (H₂SO₄), Perchlorsäure, Salzsäure, Bromwasserstoffsäure, Chlorsulfonsäure, Methansulfonsäure, Trichlormethansulfonsäure, Trifluormethansulfonsäure, Benzolsulfonsäure oder p-Toluolsulfonsäure.

Weitere Beispiele für erfindungsgemäße saure Katalysatoren sind saure Ionenaustauscher oder lonenaustauscherharze. Ionenaustauscher ist die Sammelbezeichnung für feste Stoffe oder Flüssigkeiten, welche fähig sind, positiv oder negativ geladene Ionen aus einer Elektrolyt-Lösung unter Abgabe äquivalenter Mengen anderer Ionen aufzunehmen. Bevorzugt werden feste Körner und Partikel verwendet, deren Matrix durch Kondensation (Phenol-Formaldehyd) oder durch Polymerisation (Copolymere aus Styrol und Divinylbenzol sowie Methacrylaten und Divinylbenzol) erhalten wurden.

Die erfindungsgemäß verwendeten sauren Ionenaustauscher tragen zum Beispiel Sulfonsäure-Gruppen, Carbonsäure- oder Phosphonsäure-Gruppen. Auch können Ionenaustauscher verwendet werden, die ein hydrophiles Cellulose-Gerüst besitzen oder aus vernetztem Dextran oder Agarose bestehen, und saure funktionelle Gruppen, zum Beispiel Carboxylmethyl- oder Sulfoethylgruppen, tragen. Es können auch anorganische Ionenaustauscher, wie Zeolite, Montmorillonite, Palygorskite, Bentonite und andere Aluminiumsilicate, Zirconiumphosphat, Titanwolframat und Nickelhexacyanoferrat(II) verwendet werden. Zu Ionenaustauschern siehe auch RÖMPP, Chemisches Lexikon, Online Version 3.0, oder "Ion Exchangers" von F. De Dardel und T. V. Arden, erschienen in Ullmann's Encyclopedia of Industrial Chemistry, Electronic Release 2007. Saure Ionenaustauscher sind beispielsweise in fester oder gelöster Form erhältlich unter den Produktbezeichnung Amberlite™, Ambersept™ oder Amberjet™ von der Fa. Rohm und Haas.

Besonders bevorzugt als erfindungsgemäße Katalysatoren sind Phosphorsäure, Polyphosphorsäure, Chlorsulfonsäure, Methansulfonsäure, Trichlormethansulfonsäure, Trifluormethansulfonsäure, Benzolsulfonsäure, p-Toluolsulfonsäure oder saure Ionenaustauscher.

Ganz besonders bevorzugt sind Methansulfonsäure, Trifluormethansulfonsäure, p-Toluolsulfonsäure oder saure Ionenaustauscher.

Die Zugabe der Säure als Katalysator erfolgt im allgemeinen in einer Menge von 50 ppm bis 10 Gew.-%, bevorzugt von 100 ppm bis 5 Gew.-%, besonders bevorzugt 1000 ppm bis 3 Gew.-% bezogen auf die Menge des eingesetzten Alkohols oder Alkoholgemisches.

Wird ein sauer Ionenaustauscher als Katalysator verwendet, so setzt man üblicherweise eine Menge von 1000 ppm bis 30 Gew.-%, bevorzugt von 1 - 25 Gew.-% , besonders bevorzugt 1 - 20 Gew.-% bezogen auf die Menge des eingesetzten Alkohols oder Alkoholgemisches zu. Selbstverständlich können die Katalysatoren auch in Mischung eingesetzt werden.

Ferner ist es möglich, sowohl durch Zugabe des geeigneten Katalysators, als auch durch Wahl einer geeigneten Temperatur die Polykondensationsreaktion zu steuern. Weiterhin lässt sich über die Zusammensetzung der Ausgangskomponenten und über die Verweilzeit das mittlere Molekulargewicht des Polymeren sowie dessen Struktur einstellen.

Die Umsetzung erfolgt üblicherweise bei einer Temperatur von 0 bis 300 °C, bevorzugt 0 bis 250 °C, besonders bevorzugt bei 60 bis 250 °C und ganz besonders bevorzugt bei 80 bis 250 °C in Substanz oder in Lösung. Dabei können allgemein alle Lösungsmittel verwendet werden, die gegenüber den jeweiligen Edukten inert sind. Wird Lösungsmittel eingesetzt, werden vorzugsweise organische Lösungsmittel, wie zum Beispiel Decan, Dodecan, Benzol, Toluol, Chlorbenzol, Xylol, Dimethylformamid, Dimethylacetamid oder Solventnaphtha verwendet.

In einer besonders bevorzugten Ausführungsform wird die Kondensationsreaktion in Substanz durchgeführt, das heißt ohne Zugabe von Lösungsmittel. Das bei der Reaktion freiwerdende Wasser kann zur Beschleunigung der Reaktion aus dem Reaktionsgleichgewicht entfernt werden, zum Beispiel destillativ, gegebenenfalls bei vermindertem Druck.

Die Herstellung der erfindungsgemäßen hochfunktionellen Polyetherpolyole erfolgt zumeist in einem Druckbereich von 0,1 mbar bis 20 bar, bevorzugt bei 1 mbar bis 5 bar, in Reaktoren, die im Batchbetrieb, halbkontinuierlich oder kontinuierlich betrieben werden.

Bevorzugt wird die Reaktion in einer sogenannten "Eintopffahrweise" durchgeführt, in der das Monomer vollständig vorgelegt und die Reaktion in einem rückvermischten Reaktor durchgeführt wird. Denkbar sind aber auch Reaktionsführungen in einem mehrstufigen Reaktorsystem, beispielsweise einer Rührkesselkaskade oder einem Rohrreaktor. In einer bevorzugten alternativen Ausführungsform der vorliegenden Erfindung kann die Reaktion in einem Kneter, Extruder, Intensivmischer oder Schaufeltrockner durchgeführt werden.

Die Reaktion kann gegebenenfalls auch unter Zuhilfenahme von Ultraschall oder Mikrowellenstrahlung durchgeführt werden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Kondensationsprodukt lagerstabil ist.

Weiterhin kann man den Katalysator deaktivieren, zum Beispiel durch Zugabe einer basischen Komponente, wie einer Lewis-Base oder einer organischen oder anorganischen Base.

In einer weiteren bevorzugten Ausführungsform können die erfindungsgemäßen Polyetherole neben den bereits durch die Reaktion erhaltenden OH-Gruppen weitere funktionelle Gruppen enthalten. Diese umfassen Mercaptogruppen, primäre, sekundäre oder tertiäre Aminogruppen, Estergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder kurz- oder langkettige Alkylreste. Dazu werden Modifizierungsreagenzien eingesetzt. Dabei handelt es sich um Verbindungen, die eine solche weitere funktionelle Gruppe und eine gegenüber Alkohol reaktiv Gruppe aufweisen. Solche gegenüber Alkohol reaktiven Gruppen können beispielsweise Isocyanatgruppen, Säuregruppen, Säurederivate, Epoxidgruppen oder Alkoholgruppen sein. Dabei können die Modifizierungsreagenzien vor oder während dem Umsetzen der tri- oder höherfunktionellen Alkohole zum hochfunktionellen Polyether zugegeben werden.

Setzt man den tri- oder höherfunktionellen Alkohol oder die Alkoholmischung in Gegenwart von Modifizierungsreagenzien in einem Schritt um, so erhält man ein Polyether-Polymer mit statistisch verteilten, von den Hydroxylgruppen verschiedenen Funktionalitäten. Eine derartige Funktionalisierung lässt sich zum Beispiel durch Zusatz von Verbindungen erzielen, die Mercaptogruppen, primäre, sekundäre oder tertiäre Aminogruppen, Estergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder kurz- oder langkettige Alkylreste tragen.

Für die Modifikation mit Mercaptogruppen lässt sich zum Beispiel Mercaptoethanol einsetzten. Tertiäre Aminogruppen lassen sich zum Beispiel durch Einbau von aminogruppenhaltigen Alkoholen, wie Triethanolamin, Tripropanolamin, Triisopropanolamin, N-Methyldiethanolamin, N-Methyldipropanolamin oder N,N-Dimethylethanolamin erzeugen. Durch Zugabe von Dicarbonsäuren, Tricarbonsäuren, Dicarbonsäureestern, wie beispielsweise Adipinsäure, Terephthalsäuredimethylester oder Tricarbonsäureestern lassen sich Estergruppen erzeugen. Weiterhin können Estergruppen durch Umsetzung der OH-Gruppen mit Lactonen, speziell mit Caprolacton, erhalten werden. Durch Reaktion mit langkettigen Alkanolen oder Alkandiolen lassen sich langkettige Alkylreste einbringen. Die Reaktion mit Alkyl- oder Arylisocyanaten, - diisocyanaten oder - oligoisocyanaten generiert entsprechende Urethangruppen aufweisende Polyether.

Eine nachträgliche Funktionalisierung kann man erhalten, indem das erhaltene hochfunktionelle, hoch- oder hyperverzweigte Polyetherpolyol in einem zusätzlichen Verfahrensschritt mit einem geeigneten Funktionalisierungsreagenz, welches mit den OH-Gruppen des Polyethers reagieren kann, umsetzt.

Die erfindungsgemäßen hochfunktionellen Polyether können zum Beispiel durch Zugabe von Säure-, Säurehalogenid- oder Isocyanatgruppen enthaltenden Modifizierungsreagenzien modifiziert werden. Weiterhin lassen sich beispielsweise Säuregruppen enthaltende Polyether durch Umsetzung der OH-Gruppen mit Anhydridgruppen enthaltenden Verbindungen erhalten. Estergruppen lassen sich nachträglich beispielsweise durch Umsetzung mit Caprolacton einführen. Dabei kann die Länge der Esterketten durch die Einsatzmenge an Caprolacton gesteuert werden.

Weiterhin können die erfindungsgemäßen hochfunktionelle Polyetherole auch durch Umsetzung mit Alkylenoxiden, zum Beispiel Ethylenoxid, Propylenoxid, Butylenoxid oder deren Gemischen, als Modifizierungsreagenzien in hochfunktionelle Polyetherpolyole, enthaltend lineare Polyetherketten mit einstellbarer Polarität, überführt werden.

Die konkrete Wahl der Reaktionsbedingungen, wie Druck und Temperatur, und die Konzentration der Alkohole und gegebenenfalls der Modifizierungsreagenzien ist von der Reaktivität der Alkohole und der Modifizierungsreagentien abhängig. Prinzipiell führt eine geringere Temperatur, eine höhere Reaktivität der Modifizierungsreagenzien und eine höhere Konzentration der Modifizierungsreagenzien eher zu niedermolekularen modifizierten Alkoholen, wobei eine höhere Temperatur, eine geringere Konzentration an Modifizierungsreagenzien und eine geringere Reaktivität der Modifizierungsreagenzien eher zu Kondensationsprodukten führt, die mehrere di-, tri- und höherfunktionellen Alkoholen pro Molekül aufweisen. Die Reaktionsbedingungen werden dabei vorzugsweise so gewählt, dass die erhaltenen Polyetherpolyole Kondensationsprodukte aus im Mittel mindestes 3, besonders bevorzugt mindestens 4, weiter bevorzugt mindestens 5 und insbesondere mindestens 6 di-, tri- oder höherfunktionellen Alkoholen aufweisen. Weiter bevorzugt werden die Reaktionsbedingungen so gewählt, dass die erhaltenen hochfunktionellen Polyetherpolyole Kondensationsprodukte aus im Mittel mindestens 3, besonders bevorzugt mindestens 4, weiter bevorzugt mindestens 5 und insbesondere mindwestens 6 tri- oder höherfunk-tionellen Alkoholen sind. Die Anzahl der di-, tri- oder höherfunktionellen Alkohole im Kondensationsprodukt lässt sich beispielsweise aus dem durch GPC ermittelten zahlenmittleren Molekulargewicht Mₙ bestimmen.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Umsetzungsprodukt durch strippen, das heißt durch Entfernen von niedermolekularen, flüchtigen Verbindungen, gereinigt. Dazu kann nach Erreichen des gewünschten Umsatzgrades der Katalysator desaktiviert werden. Anschließend werden die niedermolekularen flüchtigen Bestandteile, zum Beispiel Lösungsmittel, Ausgangsmonomere, leichtflüchtige Spaltprodukte, leichtflüchtige oligomere oder cyclische Verbindungen oder Wasser destillativ, gegebenenfalls unter Einleitung eines Gases, vorzugsweise Stickstoff, Kohlendioxid oder Luft, gegebenenfalls bei vermindertem Druck, entfernt. In einer bevorzugten Ausführungsform wird das Produkt in einem Dünnschichtverdampfer von flüchtigen Bestandteilen befreit.

Aufgrund der Beschaffenheit der Ausgangsmonomere ist es möglich, dass aus der Umsetzung Kondensationsprodukte mit unterschiedlichen Strukturen resultieren können, die Verzweigungen und cyclische Einheiten, aber keine Vernetzungen aufweisen. Die Anzahl der reaktiven Gruppen ergibt sich dabei aus der Beschaffenheit der eingesetzten Monomere und dem Polykondensationsgrad, der erfindungsgemäß so zu wählen ist, dass der Gelpunkt nicht erreicht wird.

Weiterhin können erfindungsgemäße Produkte, die aus TMP-Einheiten aufgebaut sind, Molekülteile aufweisen, bei denen die OH-Gruppen einer endständigen TMP-Einheit als Formaldehydacetal vorliegen. Der Gehalt an Acetalgruppen kann mit Hilfe der Reaktionsbedingungen für die erfindungsgemäßen Polyetherpolyole eingestellt werden.

Die erfindungsgemäßen hochfunktionellen hochverzweigten Polyether lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Als Komponente C) können die erfindungsgemäßen Formmassen bis zu 70, vorzugsweise bis zu 50 Gew.-% weiterer Zusatzstoffe enthalten.

Als faser- oder teilchenförmige Füllstoffe C1) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 5 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 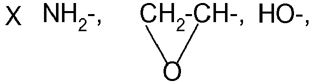
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente C2) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente C3) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole C3) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 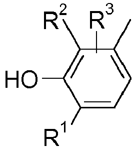 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 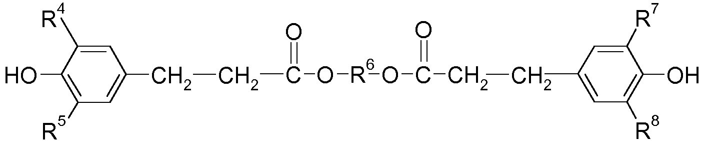 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formen entsprechen, sind

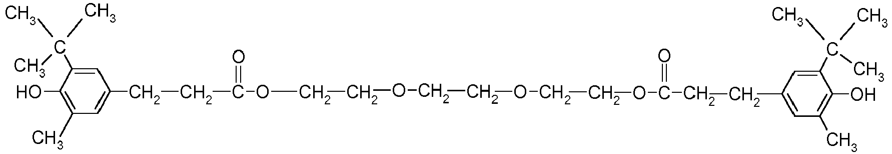

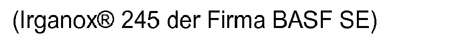

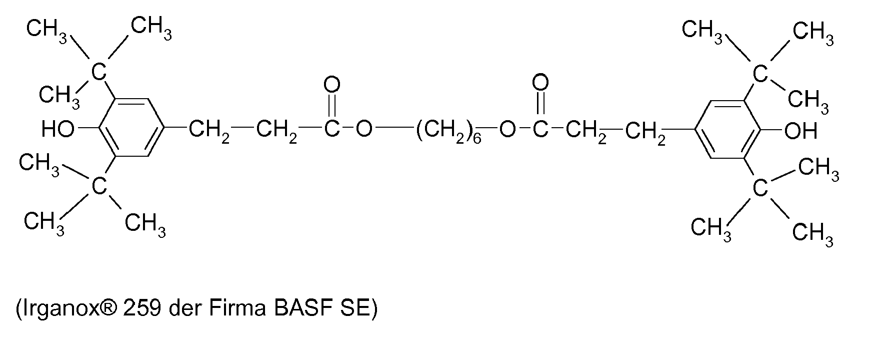

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, das besonders gut geeignet ist.

Die Antioxidantien C), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente C4) können die erfindungsgemäßen Formmassen 0,05 bis 5, vorzugsweise 0,1 bis 2 und insbesondere 0,25 bis 1,5 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente C4) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe C) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

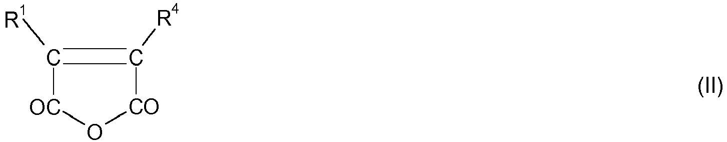

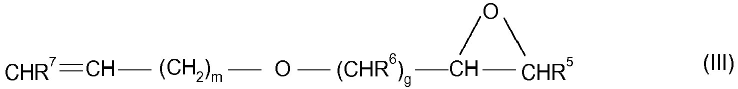

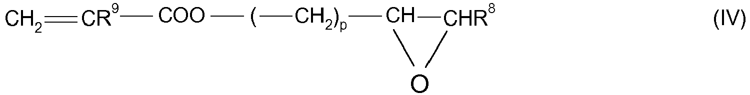

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

### Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 5 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 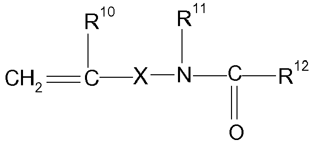 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 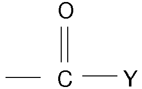
- Y: O-Z oder NH-Z und
- Z: eine C₁- bis C₁₀-Alkylen- oder C₆- bis C₁₂-Arylengruppe.

Auch die in der EP-A208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexyl-acrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) sowie gegebenenfalls C) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitbarkeit bei gleichzeitig guter Mechanik, sowie eine deutlich verbesserte WAB und Oberfläche aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponen-ten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Es wurden folgende Komponenten eingesetzt:

### Komponente A

Polyamid 66 mit einer Viskositätszahl VZ von 148 ml/g, gemessen als 0,5 gew.-%ige Lösung in 96 gew.-%iger Schwefelsäure bei 25°C nach ISO 307. (Es wurde Ultramid® A27der BASF SE verwendet).

### Komponente B

### Herstellung

Die Polymerisation wurde in einem 4L-Vierhalskolben ausgerüstet mit Rührer, Innenthermometer und Vigreuxkolonne (Länge 20 cm, Durchmesser 4 cm) mit aufgesetzter Destillationsbrücke mit Vakuumanschluß durchgeführt. Die Mischung aus 1250.4 g Pentaerythrit, 1393.3 g Triethylenglykol und 6.8 g Trifluormethansulfonsäure wurde bei Raumtemperatur (23°C) vorgelegt und unter Rühren mittels Ölbad langsam auf 180°C erwärmt. Nach Erreichen der Reaktionstemperatur wurde der Druck auf 200 mbar reduziert und entstehendes Kondensat über die Destillationsbrücke bei einer Übergangstemperatur von 60°C entfernt und in einem Rundkolben aufgefangen. Nach 3,5 h waren so 452 g Destillat gesammelt worden. Nun ließ man die Reaktionsmischung unter dem verminderten Druck auf 40°C abkühlen. Nach Druckausgleich wurde das Rohprodukt zur Neutralisation mit 8 g 5-molarer ethanolischer KOH versetzt und damit auf pH 7,2 eingestellt. Anschließend wurde 2,6 g 50%ige wässrige unterphosphorige Säure zugegeben und der pH auf 5,8 eingestellt. Nun wurde die Vigreuxkolonne entfernt, nach direktem Anschluß der Destillationsbrücke an das Reaktionsgefäß das Reaktionsgemisch erneut auf 130°C erwärmt und bei einem Druck von 160 mbar über einen Zeitraum von 4 h von restlichen flüchtigen Bestandteilen befreit.
Nach dem Abkühlen auf 23°C wies das Produkt folgende Kennzahlen auf:
GPC: Mw/Mn = 3700 / 520 [g/mol]
OH-Zahl: 680 mgKOH/g

Die GPC-Analytik erfolgte in Hexafluorisopropanol als mobile Phase und Polymethylmethacrylat als Standard, als Detektor wurde ein Refraktometer verwendet.
Die Bestimmung der OH-Zahl erfolgte nach DIN 53240, Teil 2.
Komponente C/1
   Glasfasern
Komponente C/2
   Calciumstearat
Komponente C/3
   CuJ/KJ im Verhältnis 1 : 4 (20 iger Batch in PA6)
Komponente C/4
   40 %iger PA6 Masterbach mit Nigrosin

Die Formmassen wurden auf einer ZSK 30 bei einem Durchsatz von 25 kg/h und ca. 280°C flachem Temperaturprofil hergestellt.

Es wurden folgende Messungen durchgeführt:
Zugversuch nach ISO 527, Mechanikkennwerte vor und nach Wärmelagerung bei 200°C und 220°C im Umluftofen
VZ: c = 5 g/l in 96 5iger Schwefelsäure, nach ISO 307

Die Zusammensetzungen der Formmassen und die Ergebnisse der Messungen sind den Tabellen zu entnehmen.

**Tabelle 1**

| Komponenten [Gew.-%] | | | | | | |
|---|---|---|---|---|---|---|
| Bsp. | A | B | C/1 | C/2 | C/3 | C/4 |
| 1V | 67,45 | - | 30 | 0,35 | 0,3 | 1,9 |
| 1 | 66,95 | 0,5 | 30 | 0,35 | 0,3 | 1,9 |

| | | | | | | |
|---|---|---|---|---|---|---|
| V = zum Vergleich | | | | | | |

**Tabelle 2**

| Mechanik nach Wärmelagerung 200°C | | | | | |
|---|---|---|---|---|---|
| Bsp. Nr. | E-modul, MPa | | | | |
| | 0h | 250h | 500h | 750h | 1000h |
| 1V | 9830 | 10310 | 10420 | 10330 | 10320 |
| 1 | 9570 | 10400 | 10350 | 10200 | 10250 |
| | | | | | |

| Bsp. Nr. | Tensile strength (Bruchspannung) | | | | |
|---|---|---|---|---|---|
| | 0h | 250h | 500h | 750h | 1000h |
| 1V | 187 | 172 | 146 | 141 | 129 |
| 1 | 188 | 182 | 161 | 159 | 143 |

| Bsp. Nr. | Elongation at break, % (Bruchdehnung) | | | | |
|---|---|---|---|---|---|
| | 0h | 250h | 500h | 750h | 1000h |
| 1V | 3.4 | 2.2 | 1.7 | 1.6 | 1.5 |
| 1 | 3.4 | 2.4 | 1.9 | 1.9 | 1.7 |

**Tabelle 3**

| Mechanik nach Lagerung bei 220°C | | | | |
|---|---|---|---|---|
| Bsp. Nr. | E-modulus, MPa | | | |
| | 0h | 250h | 500h | 750h |
| 1V | 9830 | 10580 | 10200 | 8400 |
| 1 | 9580 | 10400 | 10000 | 9600 |
| | | | | |

| Bsp. Nr. | | Tensile strength (Bruchspannung) | | |
|---|---|---|---|---|
| | 0h | 250h | 500h | 750h |
| 1V | 187 | 158 | 121 | 71 |
| 1 | 188 | 169 | 140 | 96 |
| | | | | |

| Bsp. Nr. | Elongation at break, % (Bruchdehnung) | | | |
|---|---|---|---|---|
| | 0h | 250h | 500h | 750h |
| 1V | 3.4 | 1.9 | 1.4 | 1.0 |
| 1 | 3.4 | 2.0 | 1.6 | 1.2 |

## Patentansprüche

1. Thermoplastische Formmassen, enthaltend
A) 10 bis 99,99 Gew.-% eines Polyamides
B) 0,01 bis 20 Gew.-% eines hochfunktionellen hyperverzweigten Polyetherols mit einer OH Zahl von 3 bis 1350 mg KOH/g Polyetherol (gemäß DIN 53240, Teil 2) und einem Verzweigungsgrad von 10 bis 99,9 %, erhältlich durch Umsetzung von mindestens einem tri- oder höherfunktionellen Alkohol und weiteren difunktionellen Alkoholen sowie gegebenenfalls weiteren monofunktionellen Alkoholen und/oder Modifizierungsreagenzien mit Hilfe von sauren Katalysatoren, wobei der tri- oder höherfunktionelle Alkohol nicht Glycerin ist,
C) 0 bis 70 Gew.-% weiterer Zusatzstoffe,
wobei die Summe der Gewichtsprozente der Komponenten A) bis C) 100 % ergibt.

2. Thermoplastische Formmassen nach Anspruch 1, wobei das Polyetherol B) ein Zahlenmittel des Molekulargewichtes (Mₙ) von 250 bis 30 000 g/mol aufweist.

3. Thermoplastische Formmassen nach den Ansprüchen 1 oder 2, in denen die Komponente B) eine Glasübergangstemperatur T_{g} von -30 bis +150 °C aufweist.

4. Thermoplastische Formmassen nach den Ansprüchen 1 bis 3, in denen die Komponente B) neben den Ethergruppen, die das Polymergerüst bilden, end- oder seitenständig mindestens vier OH-Gruppen aufweist.

5. Thermoplastische Formmassen nach Anspruch 4 , in denen die Komponente B) mindestens vier primäre OH-Gruppen aufweist.

6. Thermoplastische Formmassen nach den Ansprüchen 1 bis 5, in denen die Komponente B) das Kondensationsprodukt aus im Mittel mindestens 3 di-, tri- oder höherfunktionellen Alkoholen ist.

7. Verwendung der thermoplastischen Formmassen gemäß den Ansprüchen 1 bis 6 zur Herstellung von Fasern, Folien und Formkörpern.

8. Fasern, Folien und Formkörper, erhältlich aus den thermoplastischen Formmassen gemäß den Ansprüchen 1 bis 6.

## Claims

1. A thermoplastic molding composition, comprising
A) from 10 to 99.99% by weight of a polyamide
B) from 0.01 to 20% by weight of a high-functionality hyperbranched polyetherol with an OH number of from 3 to 1350 mg KOH/g of polyetherol (to DIN 53240, part 2) and a degree of branching of from 10 to 99.9%, obtainable via reaction of at least one tri- or polyhydric alcohol and of further dihydric alcohols, and also optionally of further monohydric alcohols and/or modifier reagents, with the aid of acidic catalysts, where the tri- or polyhydric alcohol is not glycerol,
C) from 0 to 70% by weight of further additives,
where the total of the percentages by weight of components A) to C) is 100%.

2. The thermoplastic molding composition according to claim 1, where polyetherol B) has a number-average molar mass (Mₙ) of from 250 to 30 000 g/mol.

3. The thermoplastic molding composition according to claim 1 or 2, in which component B) has a glass transition temperature T_{g} of from -30 to +150°C.

4. The thermoplastic molding composition according to claims 1 to 3, in which component B) comprises, alongside the ether groups which form the polymer skeleton, at least four terminal or pendant OH groups.

5. The thermoplastic molding composition according to claim 4, in which component B) has at least four primary OH groups.

6. The thermoplastic molding composition according to claims 1 to 5, in which component B) is the condensate of an average of at least 3 di-, tri, or polyhydric alcohols.

7. The use of the thermoplastic molding compositions according to claims 1 to 6 for the production of fibers, foils, and moldings.

8. A fiber, a foil, or a molding, obtainable from the thermoplastic molding compositions according to claims 1 to 6.

## Revendications

1. Matériaux de moulage thermoplastiques, contenant :
A) 10 à 99,99 % en poids d'un polyamide,
B) 0,01 à 20 % en poids d'un polyétherol hyperramifié, hautement fonctionnalisé, ayant un indice OH de 3 à 1 350 mg de KOH/g de polyétherol (selon DIN 53240, partie 2) et un degré de ramification de 10 à 99,9 %, pouvant être obtenu par mise en réaction d'au moins un alcool trifonctionnel ou d'une fonctionnalité supérieure et d'autres alcools bifonctionnels, ainsi qu'éventuellement d'autres alcools monofonctionnels et/ou de réactifs de modification à l'aide de catalyseurs acides, l'alcool trifonctionnel ou d'une fonctionnalité supérieure n'étant pas la glycérine,
C) 0 à 70 % en poids d'additifs supplémentaires,
la somme des pourcentages en poids des composants A) à C) étant de 100 %.

2. Matériaux de moulage thermoplastiques selon la revendication 1, dans lesquels le polyétherol B) présente une moyenne en nombre du poids moléculaire (Mₙ) de 250 à 30 000 g/mol.

3. Matériaux de moulage thermoplastiques selon la revendication 1 ou 2, dans lesquels le composant B) présente une température de transition vitreuse T_{g} de - 30 à +150 °C.

4. Matériaux de moulage thermoplastiques selon les revendications 1 à 3, dans lesquels le composant B) comprend en plus des groupes éther, qui forment le squelette du polymère, au moins quatre groupes OH en position terminale ou latérale.

5. Matériaux de moulage thermoplastiques selon la revendication 4, dans lesquels le composant B) comprend au moins quatre groupes OH primaires.

6. Matériaux de moulage thermoplastiques selon les revendications 1 à 5, dans lesquels le composant B) est le produit de condensation d'en moyenne au moins 3 alcools bifonctionnels, trifonctionnels ou d'une fonctionnalité supérieure.

7. Utilisation des matériaux de moulage thermoplastiques selon les revendications 1 à 6 pour la fabrication de fibres, de films et de corps moulés.

8. Fibres, films et corps moulés, pouvant être obtenus à partir des matériaux de moulage thermoplastiques selon les revendications 1 à 6.
